# EUROPEAN PATENT SPECIFICATION

(11) **EP 4 250 145 B1**
(45) Date of publication and mention of the grant of the patent: **21.01.2026**
(21) Application number: 22305369.5
(22) Date of filing: 25.03.2022
(51) Int. Cl.: G06F 21/33, G06F 21/60, G06F 21/62

(54) **DATA ACCESS MANAGEMENT**
DATENZUGRIFFSVERWALTUNG
GESTION D'ACCÈS À DES DONNÉES

(43) Date of publication of application: 27.09.2023
(73) Proprietor: Amadeus S.A.S., 06410 Biot (FR)
(72) Inventor: DEMAZEAU, Michel, 06200 Nice (FR); MONBEL, Stephane, 06200 Nice (FR); PEICLE, Romain, 06160 Antibes (FR); COGNE, Francois, 06560 Valbonne (FR); ARNELLO, Jennifer, 06410 Biot (FR)
(74) Representative: Mathys & Squire

(56) References cited:
- EP-A1- 3 828 728
- WO-A1-2018/162989
- GB-A- 2 592 024
- US-A1- 2007 055 666
- US-A1- 2017 142 128
- US-A1- 2019 392 162
- US-A1- 2020 204 545

## Description

### FIELD OF THE INVENTION

The present application relates to methods and systems for managing access to data. In particular, embodiments relate to methods and systems for controlling access to data for a transaction between a data owner and a data client, wherein data associated with the data owner is stored at a data host.

### BACKGROUND OF THE INVENTION

In order to conduct online transactions, it is increasingly necessary to make personal data, or other sensitive data, available to third parties. However, there are significant security risks in releasing data to third parties, both due to difficulties in assessing whether the third party is trustworthy to receive and store the data responsibly and due to risks associated with transmitting the data over a network to the third party, particularly if multiple transactions are undertaken with multiple third parties.

One example might be in the process of making a travel reservation. An owner may reserve flights, accommodation and car hire in order to complete the reservation, but this is likely to require personal details such as the owner's name and address, as well as payment details, to be sent to multiple providers over a potentially insecure network. More sensitive information, such as passport details, may also need to be transmitted to one or more providers.

Moreover, for service providers, management of owner data can create a significant security and regulatory burden. Due to increasing government regulation governing the storing and use of personal data, service providers in many parts of the world are now required to actively manage the data that is made available to them. For example, data should be permanently deleted when it is no longer needed and providers must ensure that it is stored securely and not inadvertently released from their systems.

US-A1-2020/204545 discloses a method for biometric authentication in secure data management for a transaction between a record owner and a service provider. US-Al-2007/055666 discloses a method for enabling a user to access online services of a type requiring certain types of personal data to be supplied. US-A1-2017/142128 discloses a method for providing temporary access to a user profile for an accessor. EP-Al-3828728 discloses a method of data access control in an intermediation server. WO-A1-2018/162989 discloses a method of obtaining authorization to release personal information associated with a user.

### SUMMARY OF THE INVENTION

Aspects of the invention are set out in the independent claims and preferred features are set out in the dependent claims. Preferred features of one aspect may be provided in conjunction with other aspects in any appropriate combination. In particular, dependent features of one aspect may be applied directly to other aspects. Moreover, aspects may be provided in combination in many implementations of the system.

The term "personal data" as used herein refers to data associated with and/or specific to an individual or an owner. Personal data can include but is not limited to personal identifiable information, such as a name, a title, an address, a date of birth, an age, a sex, a telephone number, an email address, payment information, health information, financial information, travel information, purchase order information, a social media profile, official identification information, legal information, biometric information and/or other information of an individual or an owner.

The term "data owner" as used herein encompasses a user device (or data owner device) belonging to or associated with a particular user, the user being associated with the personal data. The user device has an interface to enable the user to interact with the present system, optionally via a touchpoint as described below, and the user device is also in communication with the data host and the other elements of the system described herein.

Method aspects and features described herein may also be provided as system features and vice versa. Moreover, means plus function features may be provided alternatively in terms of their corresponding structure.

Particular combinations of the features described and defined in any aspect of the invention can be implemented and/or supplied and/or used independently or in conjunction with other aspects.

According to one aspect, there is provided a method of enabling data access for a transaction between a data client and a data owner, wherein the data is stored at a data host, the method implemented at the data host as set forth in independent claim 1.

The use of a temporary identifier can enable a data client to obtain in a secure and reliable manner, a share key for a particular data request that relates to a particular data owner. Once in possession of the share key, the data client does not have to request the actual data until it is needed. It is possible that the raw data itself will never be needed by the data client, but the storage of a share key enables the data client to access the data if it does become necessary to do so. This can provide reassurance to the data owner that their data is being held only in one secure location and can simplify data storage requirements for the data client, since data does not need to be retained if it can be accessed freely (using the share key) at the remote data host. Additionally, the sharing of data using this secure method increases the confidence of the data owner in undertaking transactions with the data client.

Optionally, the method may be implemented in conjunction with any one or more of the following features:
- the method further comprising receiving the share key from the data client, validating the share key and transmitting the at least a portion of the stored data to the data client.
- the method further comprising verifying that access to the data can be enabled for the data client based on the information in the access request comprises comparing an identifier of the data client received from the data owner with the identifier of the data client received in the access request.
- the request for the temporary identifier includes an identifier of the data client and wherein the temporary identifier is stored by the data host in the data owner profile together with the identifier of the data client
- the method further comprising verifying that access to the data can be enabled for the data client based on the information in the access request comprises comparing the stored temporary identifier with the temporary identifier received in the access request.
- verifying that access to the data can be enabled for the data client further comprises notifying the data owner of the access request and transmitting the share key to the data client only in response to an authorisation message from the data owner.
- the method further comprising storing the share key and the information included in the access request in the data owner profile.

According to a second aspect, there is provided a method of enabling data access for a transaction between a data client and a data owner, wherein the data is stored at a data host, the method implemented at the data client as set forth in independent claim 7.

A data host can enable a data client to have easy and reliable access to required data without having to store the data. The data access can be guaranteed for any length of time, even if the data owner is no longer directly contactable by the data client.

The second aspect is a method corresponding to the method of the first aspect but implemented at a data client.

Optionally, the method further comprises forwarding the share key to the data host to request the data and receiving the data from the data host. It is noted that this method step may take place at any time after the share key is obtained by the data client, for example the data may be requested immediately or it may be hours, weeks or months before the data access request is made.

A third related aspect includes method of enabling data access for a transaction between a data owner and a data client, wherein the data is stored at a data host, the method implemented at the data owner as set forth in independent claim 9.

As noted above, the methods described herein enable a data owner greater control over the sharing of their data. Data sharing can be enabled with selected data clients and the rights for data clients to obtain data can be rescinded in some cases by the data owner requesting the data host to rescind the share key. Since the data is stored at the data host rather than with the data client, the data owner is provided with more reassurance that the data is held securely with a trusted entity.

The third aspect is closely related to the first and second aspects and sets out the same method, but implemented at the data owner. The three methods are therefore inter-related methods implemented in a similar way to the way in which transmitters and receivers inter-operate.

Optionally, the method further comprises storing at the data owner the temporary identifier and the identifier of the data client.

Any of the first, second and third aspects may optionally be implemented in conjunction with any one or more of the following features:
- the access request further comprises a justification for requesting the data.
- the temporary identifier is associated with the data owner for a transaction with the data client.
- the temporary identifier comprises an identifier specific to the request.
- the temporary identifier comprises an alphanumeric identifier associated with the data owner or a URL or a QR code associated with the data owner.
- the data comprises identity information, contact information or payment information for the data owner.
- the data owner comprises a data owner device, optionally a handheld mobile device, a computer, or a computer terminal.
- the data client comprises a merchant system, a booking system, a service provider or a travel provider.
- the data host comprises a plurality of networked servers or a cloud based storage system.
- the duration comprises a period of time during which the data client is permitted to access the data.
- the indication of the scope of the request comprises an indication of the data requested.
- the share key comprises a unique link to enable access to the data for the data client.

According to a further unclaimed aspect, there is provided a method of enabling data access for a transaction between a data client and a data owner, wherein the data is stored at a data host, the method comprising:
sending data associated with the data owner from the data owner to the data host for storage in a data owner profile;
storing, at the data host, the data associated with the data owner in the data owner profile, the profile including a static identifier associated with the data owner;
commencing, at the data owner, a transaction with a data client and determining that the data client requires access to data stored in the profile;
sending, from the data owner to the data host, a request for a temporary identifier;
receiving, at the data host, from the data owner the request for the temporary identifier to enable access to the data by the data client;
generating, at the data host, the temporary identifier and transmitting the temporary identifier to the data owner;
receiving, at the data owner from the data host, the temporary identifier;
storing, at the data host, the temporary identifier in the data owner profile;
transmitting, from the data owner to the data client, the temporary identifier;
receiving, at the data client, from the data owner the temporary identifier for the data owner;
sending, from the data client, to the data host an access request for data associated with the data owner and stored at the data host, the access request comprising the temporary identifier, an identifier of the data client, an indication of the scope of the request, and a duration associated with the access request;
receiving, at the data host, from the data client the access request for at least a portion of the stored data;
verifying, at the data host, that access to the data can be enabled for the data client based on the information in the access request;
transmitting, from the data host to the data client, a share key for the requested data;
receiving, at the data client from the data host, the share key enabling access to the data; and
storing the share key at the data client.

Optionally, the method further comprises:
receiving, at the data owner from the data host, an access notification comprising an identifier of the data client or the temporary identifier;
determining whether the identifier of the data client or the transaction identifier in the access notification matches the data client to whom the temporary identifier was transmitted; and
sending to the data host an instruction to share the data with the data client.

The aspects above are interrelated aspects of the same method that together implement the method within the system described herein. The methods share the same technical features enabling the implementation of the invention described herein. In particular, the aspects relating to the data owner, the data client and the data host set out above are interrelated since they complement each other, acting in a similar way to transmitter and receiver components, and work together to implement the system and method as a whole.

According to a further unclaimed aspect, there is provided a method of enabling data access for a transaction between a data client and a data owner, wherein the data is stored at a data host, the method comprising:
receiving at a data host a first request from a data client to access data relating to a data owner, wherein the first request includes a first temporary identifier of the data owner, an identifier of the data client, an indication of the scope of the first request and a duration for the first request;
generating a first share key in response to the first request;
transmitting the first share key to the data client that sent the first request;
receiving at the data host a second request from a data client to access data relating to the data owner, wherein the second request includes a second temporary identifier of the data owner, an identifier of the data client, an indication of the scope of the second request and a duration for the second request;
generating a second share key in response to the second request, wherein the second share key is different from the first share key;
transmitting the second share key to the data client that sent the second request;
storing at the data host in a profile for the data owner the first share key together with an identifier of the data client that sent the first request, the indication of the scope of the request and the duration for the request; and
storing at the data host in a profile for the data owner the second share key together with an identifier of the data client that sent the second request, the indication of the scope of the request and the duration for the request.

The method ensures that each data request is handled separately, even if the request comes from the same data client in relation to the same data owner. This separation between data requests ensures that a single data client cannot gather and collate information about a data owner via sending multiple separate requests. In particular, the separate transaction identifiers and the fact that each transaction uses a unique identifier means that each request is kept separate.

In some embodiments, the data client from which the first request is received is the same as the data client from which the second request is received. Even in this case, the different transaction identifiers for different data requests ensure that data cannot be correlated at the data client between requests.

Optionally, the data client from which the first request is received is the different from the data client from which the second request is received. That is, a second entity or second data client, which may or may not be linked to the first data client, uses the first share key to request a second share key to perform their own transactions.

Optionally, the method may further be implemented in conjunction with any one or more of the following features:
- the first and the second requests to access data each further comprise a justification for requesting the data.
- the first and the second temporary identifier each comprise an identifier specific to the request.
- the first and the second temporary identifier each comprise an alphanumeric identifier associated with the data owner or a URL or a QR code associated with the data owner.
- the data comprises identity information, contact information or payment information for the data owner.
- the data owner comprises a data owner device, optionally a handheld mobile device, a computer, or a computer terminal.
- the data client comprises a merchant system, a booking system, a service provider or a travel provider.
- the data host comprises a plurality of networked servers or a cloud based storage system
- the duration comprises a period of time during which the data client is permitted to access the data.
- the indication of the scope of the request comprises an indication of the data requested.
- each of the first and second share keys comprise a unique link to enable access to the data for the data client.

In a further unclaimed aspect, there is provided a method of enabling data access for a transaction between a data client and a data owner, wherein the data is stored at a data host, the method implemented at the data host and comprising:
storing data associated with the data owner in a data owner profile, the profile including a static identifier associated with the data owner;
receiving from the data owner a request for a temporary identifier to enable access to the data by a data client, the request including an identifier of the data client;
generating and transmitting the temporary identifier to the data owner;
storing the temporary identifier and an identifier of the data client in the data owner profile;
receiving from the data client an access request for at least a portion of the stored data, the access request comprising the temporary identifier, an identifier of the data client, an indication of the scope of the request, a duration associated with the request and a contract flag;
verifying that access to the data can be enabled for the data client based on the information in the access request;
storing the share key and the duration associated with the request in the data owner profile at least for the time period of the duration;
transmitting to the data client a share key for the requested data to enable access to the data by the data client throughout the duration, wherein the share key is non-rescindable by the data host or the data owner throughout the duration.

The use of a contract flag enables data to be made available to a data client for a predetermined, agreed length of time. The contract flag prevents the data owner from rescinding the data access for the pre-agreed duration or length of time. The contract also provides reassurance to the data client that the data will always be available throughout that duration. This can increase the confidence of the data client that the data itself does not need to be accessed and stored locally, which in turn can reassure the data owner that the data is being stored securely with a single entity (the data host).

Optionally, the contract flag comprises an indicator of whether the access request comprises an agreement to provide data from the data owner to the data client. A positive flag can indicate that a contract is in place, whereas a negative flag or lack of contract flag means that no contract is in place and the agreement to share the data can be rescinded by the data owner at any time.

Optionally, the contract flag comprises a bit of data in the access request.

Preferably, the non-rescindable share key enables access by the data client to the requested data throughout the duration.

Optionally, the method may further be implemented in conjunction with any one or more of the following features:
- the access request further comprises a justification for requesting the data.
- the temporary identifier is associated with the data owner for a transaction with the data client.
- the temporary identifier comprises an identifier specific to the request.
- the temporary identifier comprises an alphanumeric identifier associated with the data owner or a URL or a QR code associated with the data owner.
- the data comprises identity information, contact information or payment information for the data owner.
- the data owner comprises a data owner device, optionally a handheld mobile device, a computer, or a computer terminal.
- the data client comprises a merchant system, a booking system, a service provider or a travel provider.
- the data host comprises a plurality of networked servers or a cloud based storage system.
- the indication of the scope of the request comprises an indication of the data requested.
- the share key comprises a unique link to enable access to the data for the data client.

According to a further unclaimed aspect, there is provided a method of enabling access to data at a first data client and a second data client, wherein the data relates to a data owner and is stored at a data host, the method comprising:
obtaining, by the first data client, a first share key from the data host;
storing the first share key at the first data client;
forwarding the first share key from the first data client to the second data client;
requesting from the data host, by the second data client, a second share key
wherein requesting the second share key comprises sending an access request for data associated with the data owner and stored at the data host, the access request including the first share key, an identifier of the second data client, an indication of the scope of the data request and a duration associated with the access request.
receiving the second share key from the data host at the second data client, enabling access to the data;
storing the second share key at the second data client.

The method according to this aspect enables a second data client to request data relating to a data owner without the data owner having to provide a transaction identifier. The method can enable a first data client to provide access to data at the data host, for example this can be useful if the second data client performs a secondary part of a transaction occurring at the first data client, or a transaction relating to a transaction occurring at the first data client. In some implementations, the second request is verified with the data owner prior to the second share key being sent to the second data client.

Optionally, the method may further be implemented in conjunction with any one or more of the following features:
- the access request further comprises a justification for requesting the data.
- the data comprises identity information, contact information or payment information for the data owner.
- the data owner comprises a data owner device, optionally a handheld mobile device, a computer, or a computer terminal.
- the data client comprises a merchant system, a booking system, a service provider or a travel provider.
- the data host comprises a plurality of networked servers or a cloud based storage system.
- the duration comprises a period of time during which the data client is permitted to access the data.
- the indication of the scope of the request comprises an indication of the data requested.
- the first share key comprises a unique link to enable access to the data for the first data client.
- the second share key comprises a unique link to enable access to the data for the second data client.

According to a further unclaimed aspect, there is provided a method of enabling data access for a transaction between a data client and a data owner, wherein the data is stored at a data host, the method implemented at the data host and comprising:
storing data associated with the data owner in a data owner profile, the profile including a static identifier associated with the data owner;
receiving from the data owner a request for a temporary identifier to enable access to the data by a data client, the request including an identifier of the data client;
generating and transmitting the temporary identifier to the data owner;
storing the temporary identifier and an identifier of the data client in the data owner profile;
receiving from the data client a communication request, the communication request comprising the temporary identifier, an identifier of the data client, an indication of the scope of the request, and a duration associated with the request;
verifying that communication can be enabled for the data client based on the information in the access request;
transmitting to the data client a share key for the requested communication;
receiving from the data client a communication, the communication including a message and a share key;
verifying the received share key;
transmitting the message to the data owner.

The present aspect may therefore enable communication between a data client and a data owner via the data host without the contact or communication details of either end party being made available to the other. This can enable a data owner to receive communications from a data client without disclosing contact details, whether that be a telephone number, email address or postal address. The method can also enable a data owner to rescind a share key to prevent further communications being sent from the data client. Moreover, a data owner can update contact details and contact preferences simply by informing the data host without having to update each data client that might want to contact them. The method is also advantageous for data clients since they do not need to store contact information for data owners, simplifying regulation for data clients, and do not need to keep such information updated.

Optionally, the method may further be implemented in conjunction with any one or more of the following features:
- verifying the share key comprises ensuring a match between the share key transmitted to the data client for that data owner and the received share key.
- further comprising receiving a reply message from the data owner, the reply message including an identifier of the data client and transmitting the reply message to the data client without identifying of the data owner.
- further comprising receiving a request from the data owner to rescind the share key transmitted to the data client to prevent further communication.
- further comprising receiving from the data owner an indication of the communication channel via which the message should be transmitted to the data owner, the communication channel optionally including telephone, internet-based messaging service, mobile telephone network messaging service or post.
- the communication request further comprises a justification for the communication.
- the temporary identifier is associated with the data owner for a transaction with the data client.
- the temporary identifier comprises an identifier specific to the request.
- the temporary identifier comprises an alphanumeric identifier associated with the data owner or a URL or a QR code associated with the data owner.
- the data comprises identity information, contact information or payment information for the data owner.
- the data owner comprises a data owner device, optionally a handheld mobile device, a computer, or a computer terminal.
- the data client comprises a merchant system, a booking system, a service provider or a travel provider.
- the data host comprises a plurality of networked servers or a cloud based storage system.
- the duration comprises a period of time during which the data client is permitted to communicate with the data owner.
- the indication of the scope of the request comprises an indication of the data requested.
- the share key comprises a unique link to enable access to the data for the data client.

According to a further unclaimed aspect, there is provided a method of sharing data in a distributed system comprising a plurality of data owners, a plurality of data clients and at least one data host, wherein data associated with each data owner is stored at the data host, the method comprising:
generating a share key for each access request between a data owner and a data client;
storing each share key at the data host in a profile associated with the data owner, wherein the share key is stored in conjunction with an identifier of the data owner, an identifier of the data client and a duration for the data request, and wherein the share key is unique to each access request;
receiving a further access request from at least one data client, the further data access request comprising a matching request;
reviewing the stored information at the data host to determine whether the data owner associated with the further access request corresponds to a data owner associated with a previous access request;
communicating the correspondence between the previous data owner and the further data owner to the data client.

As noted above, the methods described herein enable the sharing of data between a data owner and a data client without the data client necessarily learning the identity of the data owner. The methods also enable separation between different data requests so that a request for a second set of data cannot be correlated with a first set of data. As described herein, this increases data security. However, there are situations in which a data client might genuinely need to know whether two separate data requests are associated with a single data owner. For example, a hotel booking system may receive two data requests with very similar details and may wish to check that a data owner has not accidentally made a duplicate booking. In this type of situation, the present aspect allows a data client to query the data host to confirm whether details associated with a first data access request match or correlate with details associated with a second data access request. In particular, the matching request can inform the data client that the data owner associated with the two requests is the same. This can enable double bookings to be detected and avoided. The claimed method simply confirms whether there is a match or not. However, further steps can enable a data client to confirm which data owner is implicated in a duplicated request and/or to contact the relevant data owner to clarify the duplicate situation.

Optionally, the method may further be implemented in conjunction with any one or more of the following features:
- further comprising, prior to communicating the correspondence to the data client, sending an authorisation request to the data owner to request permission to communicate the correspondence to the data client.
- communicating the correspondence comprises confirming to the data client that the data owner associated with the previous access request is the same as the data owner associated with the further access request.
- communicating the correspondence comprises identifying the data owner associated with the previous access request and the data owner associated with the further access request to the data client.
- each access request comprises a temporary identifier for a transaction between a data client and a data owner, an identifier of the data client, an indication of the scope of the request, and a duration associated with the access request.
- the access request further comprises a justification for requesting the data.
- the temporary identifier is associated with the data owner for a transaction with the data client.
- the temporary identifier comprises an identifier specific to the request.
- the temporary identifier comprises an alphanumeric identifier associated with the data owner or a URL or a QR code associated with the data owner.
- the data comprises identity information, contact information or payment information for the data owner.
- the data owner comprises a data owner device, optionally a handheld mobile device, a computer, or a computer terminal.
- the data client comprises a merchant system, a booking system, a service provider or a travel provider.
- the data host comprises a plurality of networked servers or a cloud-based storage system.
- the duration comprises a period of time during which the data client is permitted to access the data.
- the indication of the scope of the request comprises an indication of the data requested.
- the share key comprises a unique link to enable access to the data for the data client.

According to a further unclaimed aspect, there is provided a method of enabling transactions in a distributed system comprising a plurality of data owners, a plurality of data clients and at least one data host, wherein data associated with each data owner is stored at the data host, the method comprising:
managing at a data host a confidence score for at least one data owner;
wherein managing comprises increasing the confidence score if a trusted third party verifies the data owner or increasing the confidence score if the data owner successfully completes a transaction with a data client;
storing the confidence score in a profile associated with the data owner;
receiving at the data host from a data client an access request associated with the data owner, the access request including a request for the confidence score;
generating a share key for the data client in response to the access request;
requesting permission from the data owner to share the confidence score with the data client;
on receipt of permission from the data owner, forwarding to the data client together with the share key the confidence score for the data owner.

Providing a confidence score alongside the use of access requests and share keys can increase the confidence of all system users. In particular, transactions with a trusted data owner who has a high confidence score can be simplified and accelerated. For example, a data owner with a high confidence score may have goods shipped to them before payment has fully cleared since the data client is assured that the necessary information to enable payment is held with the data host.

Optionally, the method further comprises receiving a verification of a data owner from a trusted third party and increasing the confidence score associated with the data owner and/or receiving confirmation of a successful transaction from a data client and increasing the confidence score for a data owner associated with the successful transaction. These mechanisms can allow data owners to increase their associated confidence scores and thereby improve transactions with data clients.

In one embodiment, the method further comprises managing a confidence score for at least one data client, including increasing the confidence score if a trusted third party verifies the data client or increasing the confidence score if the data client successfully completes a transaction with a data owner. This can enable a data owner to determine easily which data clients are reliable so they can select those data clients to transact with.

Optionally, the method may further be implemented in conjunction with any one or more of the following features:
- the data stored at the data host comprises identity information, contact information or payment information for the data owner.
- the data owner comprises a data owner device, optionally a handheld mobile device, a computer, or a computer terminal.
- the data client comprises a merchant system, a booking system, a service provider or a travel provider.
- the data host comprises a plurality of networked servers or a cloud based storage system.
- the access request further comprises a temporary identifier for a transaction between a data client and a data owner, an identifier of the data client, an indication of the scope of the request, and a duration associated with the access request.
- the duration comprises a period of time during which the data client is permitted to access the data.
- the indication of the scope of the request comprises an indication of the data requested.
- the share key comprises a unique link to enable access to the data for the data client.

Systems and apparatus for implementing the methods described herein, including network nodes, computer programs, computer program products, computer readable media and logic encoded on tangible media for implementing the methods are also described. Each apparatus includes means for implementing the steps of the methods described in the aspects above.

### BRIEF DESCRIPTION OF THE FIGURES

Methods and systems for processing personal data are described by way of example only, in relation to the Figures, wherein:
Figure 1 shows a diagram of an example data processing system;
Figure 2 illustrates an example method for processing personal data in a data processing system;
Figure 3 illustrates another example method for processing personal data in a data processing system; and
Figures 4a-4c illustrate exemplary data flows for completing personal data transactions.

### DETAILED DESCRIPTION

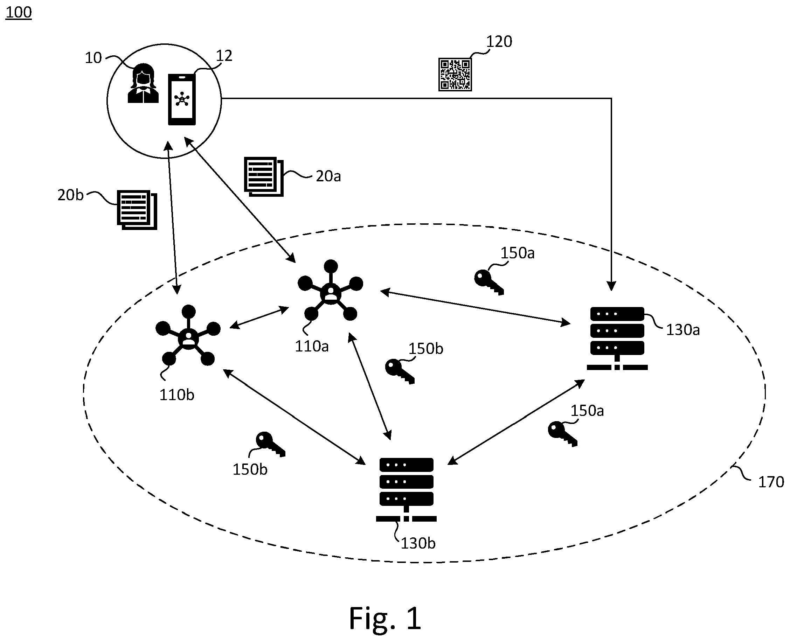

Referring to Figure 1, a data processing system 100 will now be described. The data processing system 100 includes an owner 10, an owner interface or device 12, one or more personal data hosts 110a, 110b, and one or more personal data clients 130a, 130b. The owner 10 is configured to communicate with at least one of the personal data hosts 110a, 110b and with at least one of the personal data clients 130a, 130b via the owner interface 12 and one or more communication links. The one or more personal data clients 130a, 130b are each configured to communicate with one or more of the personal data hosts 110a, 110b via one or more communication links. In some examples, each personal data host 110a, 110b is configured to communicate with one or more of the personal data clients 130a, 130b via one or more communication links.

Each personal data client 130a, 130b may be associated with an organisation, for example: a business, such as a shop, e-shop, travel agency, insurance provider, hotel, airline, car hire company and/or payment provider; an authority, such as a government, border control, emergency service and/or regulatory body. Alternatively, the personal data client 130a, 130b may be an individual such as another data owner.

In some examples, the system 100 includes more than one personal data host for example as shown in Fig. 1 which has two data hosts 110a, 110b. However, it will be appreciated that only one data host or a larger number of data hosts may be Where there are multiple personal data hosts 110a, 110b, each personal data host 110a, 110b may be configured to communicate with one or more of the other personal data hosts via one or more communication links. The personal data hosts 110a, 110b can be configured as a distributed, cloud-based system and may appear to data clients and owners as a single personal data host.

Each communication link in the system 100 may be provided by a communication network, such as the Internet, and may include wired connections, such as cable and/or Ethernet connections, and/or wireless connections, such as via mobile telephony and/or Wi-Fi^{®} networks. In some examples, one or more of the communication links use a wireless communication protocol such as Wi-Fi^{®}, 3G, 4G or 5G.

The system 100 also includes one or more personal data clients, with the system illustrated in Fig. 1 including two data clients 130a, 130b. However, it is clear that many more data clients may be provided within the system.

In some examples, the owner interface 12 is provided by an owner device of the owner 10, such as a personal computer, laptop or mobile owner device including a smartphone, smartwatch and/or tablet. The owner interface 12 may include a display and an input means, such as a touchscreen, keyboard and/or pointer. The owner interface 12 may also be a device not owned by or under the control of the owner; for example the owner interface 12 may be a booking terminal or a web interface hosted on a third party device.

Each of the one or more personal data hosts 110a, 110b may be provided by one or more servers including one or more processors, a communications interface, and a memory. The data hosts may be arranged as a cloud based storage solution. However, in the embodiment of Fig.1, data is not shared directly between the different physical data hosts.

The one or more personal data hosts 110a, 110b are configured to receive, from the owner 10 via the owner interface 12, personal data 20a, 20b of the owner 10 and to store the received personal data 20a, 20b in a memory. The personal data 20a, 20b can include one of more of: a name, a title, an address, a date of birth, an age, a sex, a telephone number, an email address, payment information (such as a bank account number, sort code, credit card number and/or PIN number), health information (such as a vaccination record), financial information (such as a credit score and/or a consumer credibility rating), travel information (such as a flight number, reservation number, itinerary details and/or emergency contacts), purchase order information (such as a confirmation number and/or a product description), a social media profile, official identification information (such as passport and/or driving license information), legal information, biometric information (such as a fingerprint, a face, a voice and/or an iris) and/or other information associated with the owner 10. Such personal data is stored in a profile for the data owner against a permanent identifier or static identifier for the data owner.

On receipt of a request from a data owner, the personal data host is configured to generate a temporary reference identifier 120 (temporary identifier) for the data owner and transmit the temporary identifier 120 to the owner 10. A personal data client 130a, 130b is configured to receive the temporary identifier 120 from the owner 10 via the owner interface 12. The temporary identifier 120 may include a URL, a number, a barcode, a quick-response (QR) code and/or an electromagnetic signal. The temporary identifier 120 is preferably an identifier specific to a particular transaction between the data owner and data client.

Each personal data client 130a, 130b is configured to request and receive, from one or more personal data hosts 110a, 110b, share keys 150a, 150b to request access to data for a particular transaction. The personal data hosts 110a, 110b are configured to generate one or more share keys 150a, 150b and transmit one or more share keys 150a, 150b to one or more personal data clients 130a, 130b. The share keys 150a, 150b may comprise a URL for accessing at least a portion of the personal data 20a, 20b.

In some examples, the personal data hosts 110a, 110b and the personal data clients 130a, 130b form a group of trusted entities 170 which operates as described in more detail below.

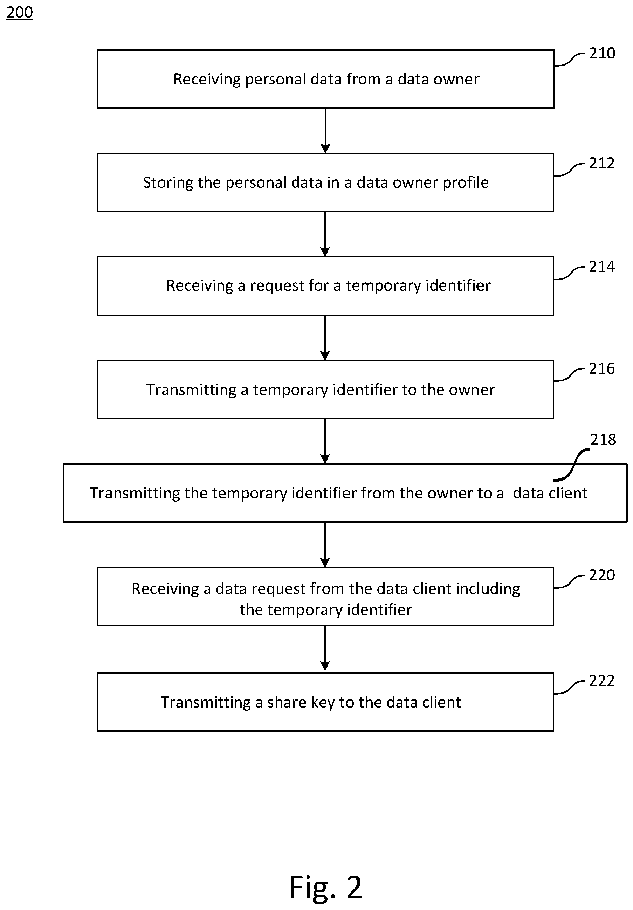

Referring to Figure 2, a data processing method 200 for processing personal data in a data processing system will now be described. While the method 200 is described with reference to the system 100, it is to be understood that any system suitable for performing the method 200 may be used.

The method 200 begins with receiving 210 personal data 20a, 20b from an owner 10 at a personal data host, and storing 212 the personal data 20a, 20b in persistent storage in a profile associated with the data owner. The persistent storage may be a disk, RAM or cloud based storage or any other type of data storage system. All of the personal data 20a, 20b from the owner 10 may be received and stored by a single personal data host 110a, or, as shown in Figure 1, personal data 20a may be received and stored by a personal data host 110a and personal data 20b may be received and stored by another personal data host 110b. In some examples, personal data 20a and personal data 20b comprise different scopes of personal data. For example, personal data 20b may comprise sensitive data, such as medical information, biometric information and/or payment information. This can allow sensitive data to be stored by separate personal data hosts and with different security protocols from the rest of the personal data 20a, thus improving the security of storing sensitive personal data.

Prior to receiving 210 the personal data 20a, 20b, the method 200 may optionally include the steps of receiving a personal data storage request from the owner 10 at the personal data host, and based on the personal data storage request, transmitting a request to the owner 10 to provide personal data 20a, 20b. The owner 10 may select one or more particular personal data hosts 110a, 110b with which they intend to store their personal data and send a data storage request to those particular hosts.

As noted above, the step of storing 212 the personal data 20a, 20b in one or more memories can include creating a profile associated with the owner 10, with the personal data 20a, 20b being stored in that profile.

The method 200 proceeds with receiving 214 a request for a temporary identifier or reference identifier 120 from the owner 10. The reference identifier request may be received from the owner 10 via an owner interface 12 at one or more personal data hosts 110a, 110b. In particular, the reference identifier request is generated when the owner 10 wishes to provide at least a portion of the stored personal data 20a, 20b to a personal data client 130a, 130b, such as a travel agency, shop, e-shop, official authority or another owner, for example in order to complete a digital or in-person transaction, identity authentication or other event.

In response to receiving 214 the request for a reference identifier 120, a reference identifier 120 is then transmitted 216 to the owner 10. The reference identifier 120 is then transmitted 218 from the owner 10 to a personal data client 130a. The transmitting 218 of the reference identifier 120 may be performed by the owner 10 displaying and/or sending the reference identifier 120 to the personal data client 130a (such as via a digital interface or a connected terminal) in a human- or machine-readable format, for example as a number, a bar code or a QR code. In a particular embodiment, the reference identifier or temporary identifier takes the form of a unique URL that is transmitted to the data client.

Alternatively or additionally, transmission 218 of the reference identifier 120 may be performed by transmitting a signal, such as a radiofrequency (RF) signal, a near field communication (NFC) signal or a Bluetooth^{®} signal, from a device of the owner 10 (such as a mobile owner device) to a signal receiver communicably connected to the personal data client 130a.

The reference identifier 120 contains no personal data of the owner 10 or any other data identifiable or associable with the owner 10. This can allow personal data to be encapsulated such that the owner 10 does not send personal data directly to the personal data client 130a across an open or insecure network.

Furthermore, in some examples, the reference identifier 120 is independent of other reference identifiers generated for the owner 10. This means that different reference identifiers are generated for different transactions and cannot be correlated with each other either at a single data client or across multiple data clients. Thus, neither the owner 10 nor their personal data 20a, 20b can be identified based on the reference identifier 120 alone, even if a previous reference identifier is known to correspond to the owner 10 or their personal data 20a, 20b. This can improve the security of sharing personal data.

After transmitting 218 the reference identifier 120 to the personal data client 130a, the method 200 proceeds with receiving 220, at the data host, a personal data request or a data access request from the personal data client 130a. The personal data request is at least partially based on the reference identifier 120 and may be generated at the personal data client 130a in response to receiving the reference identifier 120 from the owner 10. The personal data client 130a may transmit the generated personal data request to a personal data host 110a, 110b in order to request access to at least a portion of stored personal data 20a, 20b.

The personal data request can be a request for a share key 150a as described in more detail below. Additionally or alternatively, the personal data request can be a request for information based on the stored personal data 20a, 20b, such as a request for verification relating to an age, a country of residence, a nationality and/or travel information of an owner 10. For example, the personal data request may be a request to verify whether the owner 10 is above or below a predetermined age, whether the owner 10 resides in or is a national of a prohibited or excluded territory (e.g. for delivery or visa purposes), or whether a flight or other portion of a travel itinerary of the owner 10 is delayed.

In some examples, the personal data request, or data access request, includes information relating to at least one of: the reference identifier 120 or temporary identifier; an identity of the personal data client 130a; a scope of the personal data being requested; a justification for the personal data client 130a accessing the particular personal data of the owner 10; a length of time or duration for which the personal data client 130a requires access to the personal data; and/or certification of the personal data client 130a. In some embodiments, as described in more detail below, the access request can include a request for a data owner confidence factor and/or a matching request. The access request can also indicate whether the data is requested on a contract or non-contract basis, as described in more detail below.

Information relating to a scope of personal data being requested may include one or more portions of the personal data 20a, 20b. This can allow the personal data client 130a to request access to specific parts of the personal data 20a, 20b without needing to request access to all of the personal data 20a, 20b. For example, a personal data client 130a may transmit a request to a personal data host 110a, 110b for access to only the personal data of the owner 10 that it needs, such as a billing address and payment details.

Alternatively, information relating to a scope of personal data being requested may include a reference to a profile of the owner 10. This can allow the personal data client 130a to request a reference to a profile of the owner 10 without requesting access to the personal data 20a, 20b of the owner 10.

Information relating to a justification for the personal data client 130a accessing personal data of the owner 10 can include a reason as to why the personal data client 130a requires to access to specific types of personal data or a reference to a profile of the owner 10. For example, information relating to a justification can include an intended use of personal data, such as "customer booking validation and regulation compliancy". Alternatively or additionally, the information relating to a justification can include a reference, for example a link (e.g. a URL) for accessing further information about how and why the personal data client 130a uses personal data. The justification is optional within the access request since the justification can be implied by the fact that the data owner has permitted or requested that the data client has access to the data.

Information relating to a length of time or duration for which the personal data client 130a requires access to the personal data can include a date and/or a time indicative of the end of a time period during which the personal data client 130a requires access to the requested personal data. For example, the personal data request can include a date around 1 month, around 3 months, around 6 months or around 12 months into the future until which the personal data owner 130a requires access to personal data.

Information relating to certification of the personal data client 130a can include a number, a certificate, a code, an owner name and/or a password. This information can be indicative that the personal data client 130a is authorised to request personal data and/or can be used to verify an identity of the personal data client 130a. For example, by providing information relating to certification of the personal data client 130a in the request, access to personal data can be granted only to trusted personal data clients and/or the chance of granting access to personal data to a non-trusted personal data client (such as a third party impersonating a trusted personal data client) can be reduced. This can improve the security of sharing personal data.

After receiving 220 the personal data request, a share key 150a is transmitted 222 to the personal data client 130a. Based on the share key, the personal data client can obtain the data from the personal data host as described in more detail below.

Optionally, before transmitting 222 a share key 150a, the personal data host 110a, 110b may notify the owner 10 of the personal data request. The personal data host 110a, 110b then only transmits 222 a share key 150a to the personal data client 130a once an authorisation of the personal data request has been received from the owner 10. Alternatively, the owner 10 may transmit an indication to the personal data host 110a, 110b that the personal data request is to be rejected and no share key 150a corresponding to that personal data request is to be transmitted to the personal data client 130a.

The share key 150a is generated at least partially based on the personal data request. The share key 150a may include a pointer to or identifier of the portion of the personal data 20a, 20b requested in the personal data request. The pointer may be a link, such as a URL. In some embodiments, the pointer may include an access code or password that enables access to the data. The share key 150a is preferably unique for the personal data request. The share key 150a is usable only by the personal data client 130a that generated the personal data request. For example, only the personal data client 130a may access a URL included in the share key 150a in order to access a requested portion of the personal data 20a, 20b. This is ensured by the host storing an identifier of the personal data client together with an identifier of the share key before the share key is transmitted to the personal data client. The share key 150a may be time limited (for example, in accordance with information relating to a length of time included in the personal data request), such that a requested portion of the personal data 20a, 20b is accessible using the share key 150a only for a predetermined length of time or until a predetermined date and/or time.

The share key 150a may additionally or alternatively include a certification level of the requested personal data. The share key 150a may be digitally signed by the host.

Each personal data request and direct access to personal data 20a, 20b can be recorded in a memory of the one or more personal data hosts 110a, 110b as a log of personal data history. Information relating to a scope and/or a justification of the personal data being requested and/or accessed can also be stored in the log. The owner 10 can access the log of personal data history stored at the one or more personal data hosts 110a, 110b. The log can thus record instances of sharing personal data 20a, 20b of the owner 10. The reference identifier 120 may also be stored in a memory of the one or more personal data hosts 110a, 110b. If it does not break any contractual agreement between the data owner and personal data client, the owner can request the personal data host delete (revoke) this agreement and the host can do so by deleting the share key and the associated record from its memory.

Therefore, a unique share key 150a may be generated for each transaction and a record can be made of the personal data client, a scope of the shared personal data and/or a justification for the access to the personal data. The scope may include both an indication of the data that should be shared with the personal data client and a time limit for which the data will be made available. This can allow each share key to be operable for accessing only a requested scope of personal data, for a requested purpose, and by a specific personal data client. Therefore, if a personal data client 130a were to share a share key 150a with another party such as a different personal data client 130b, that other party would not be able to access the personal data corresponding to the share key 150a without separately requesting access from a personal data host 110a, 110b. Thus, this can improve the security of sharing personal data.

The method 200 can allow personal data to be shared by pulling specific data from a personal data host 110a, 110b, rather than by pushing personal data to a personal data client 130a, 130b. By requiring a personal data request to be received 220 from a personal data client 130a, and optionally requiring authorisation from an owner 10, before transmitting 222 a share key 150a to the personal data client 130a, the system can ensure that personal data is only shared with personal data clients when there is a specific request for that personal data, optionally including a scope and/or a justification. Rather than providing an entire profile of the owner 10 and/or pushing personal data to the personal data client 130a, 130b without knowing which data will be used and/or for what purpose, the method 200 can allow a specific portion of personal data to be shared only when there is a known justification for accessing that portion of personal data.

In some examples, the share key 150a constitutes an agreement to share particular data from the data owner to the data client for a certain purpose and for a specified length of time. Such an agreement is established by the process described herein but can also include a contract signed digitally by both the one or more personal data hosts 110a, 110b and the personal data client 130a. The contract can include information relating to a scope and/or a justification included in the personal data request. In either case, the share key 150a can act as a record of personal data that has been shared to the personal data client 130a.

In a particular example, a data owner may agree to grant access to specific data to a particular data client for a particular duration. The request from the data client in this case will indicate that this request implements a contract between the data owner and the data client with a specific duration.

On request from the data client including a contract flag, a share key is generated with a specific duration matching that of the contract. The data host stores an indication that the share key is subject to a contract between the data owner and the data client and therefore prevents any party from deleting or deactivating the share key throughout the duration of the contract. While the data client is provided with the share key, it is noted that the data client might not necessarily ever actually access the data itself. It may be sufficient for the data client to know that they have access to the data throughout the duration of the contract but, with this reassurance that it is available, they may never need to access the data itself.

In a further, related embodiment, the method 200 may be used to provide a communications bridge between an owner 10 and one or more other parties. The one or more personal data clients 130a, 130b may be parties, such as an organisation or another individual, who wish to communicate with the owner 10. Instead of sending messages between the owner 10 and such parties 130a, 130b using personal data of the owner 10, such as an email address, telephone number, social media account and/or postal address, the method 200 can allow the owner 10 to communicate with parties 130a, 130b without ever sharing their contact details. For example, the owner 10 can provide a reference identifier 120 to another individual or an organisation 130a, 130b, optionally specifying by which communication method (email, SMS, social media, post) they wish to communicate. The individual or organisation 130a, 130b can then send a request to a personal data host 110a, 110b, the request including the reference identifier 120, the specified communication method and a message to be sent to the owner 10. The personal data host 110a, 110b can then send the message from the individual or organisation 130a, 130b to the owner 10 using the specified communication method. Similarly, the owner 10 may send a message to be sent to the individual or organisation 130a, 130b to the personal data host 110a, 110b, which the personal data host 110a, 110b then forwards to the individual or organisation 130a, 130b. In this way, the owner 10 can communicate with one or more individuals and/or organisations 130a, 130b using a specified communication method without providing personal data to the individuals and/or organisations 130a, 130b. Communication between a data owner and a data client by whatever communication channel may be blocked by simply removing the forwarding link connecting the reference identifier to both parties that is stored at the data host. This may be done at the request of the data owner or the data host.

Another associated method 200 may be used to identify duplicate records. A particular method 200 can allow a personal data client 130a to determine if an owner 10 from which a reference identifier 120 has been received has already completed a first transaction with the personal data client 130a, or if a first transaction and a second transaction correspond to the same owner 10. For example, a hotel may wish to determine whether two reservations booked under the same name have been made by different owners, or the same owner.

In a particular method, a personal data client 130a may seek to determine whether a second transaction request is coming from a data owner with which it has already completed a transaction. The temporary identifier for the transaction is received from the data owner, as described above, and a data access request is generated by the data client 130a to send to the data host 110a. The access request includes the information set out above (for example the justification, the duration, the temporary identifier and the identifier of the data client) but also includes a "de-dupe" flag indicating that the data client would like to know whether the data access request relates to a data owner for whom a request has already been made. The de-dupe flag, or duplicate record identifier flag may simply be a small field within the data access request, and may even be a single-bit field.

On receipt of a data access request with a de-duplication flag set, the data host maps the transaction identifier onto a profile of a data owner and determines whether a similar data access request has been made by the data client previously in relation to that data owner. If not, then the duplication query can be returned as negative. If there is a match, then a duplicate result has been identified.

Before the de-duplication result is reported to any data client, the data host preferably verifies with the data owner that they give permission for the data client to be provided with the de-duplication information. In many circumstances, the de-dupe information will benefit the data owner, but it will also allow the data client to link information about a data owner together and therefore it is beneficial to see approval from the data owner before providing the data client with the de-duplication information.

In an alternative embodiment, the personal data client 130a can send a request to a personal data host 110a, 110b, the request including a share key 150a of a first transaction and either a share key 150a of a second transaction or a received reference identifier 120 for an intended second transaction. By storing generated reference identifiers 120, received personal data requests and generated share keys 150a in a memory, the personal data host 110a, 110b can compare the share key 150a of the first transaction with the share key 150a of a second transaction or the received reference identifier 120 to determine whether they relate to the same owner 10. The personal data host 110a, 110b can also determine whether the share key 150a of the first transaction, and optionally the share key 150a of the second transaction, was originally requested by the first personal data client 130a. This can allow the personal data host 110a, 110b to determine whether the two transactions relate to the same owner and whether the requesting personal data client 130a was involved in those transactions.

In some examples, a related method 200 can include the step of receiving, at the personal data host 110a, 110b, an indication from the personal data client 130a that a transaction has been completed successfully. This indication can be used to generate a rating for the data owner 10 and/or information relating to the transaction. For example, the personal data client 130a may transmit an indication to the personal data host 110a, 110b that a payment was made successfully without any problems or delay. Based on the indication, the personal data host 110a, 110b can assign the owner 10 a confidence factor. The factor can be indicative of a trustworthiness of the owner 10.

The confidence rating for the data owner can be communicated to the data client to provide an indication to the data client of the reliability or speed of response of the data owner. Data owners with a high confidence rating may enjoy faster or enhanced services. For example goods or services may be supplied with fewer additional checks or more promptly to data owners with high confidence scores.

In some examples, similar confidence factors are generated for personal data clients and the amount of justification required in future data requests received from the personal data client 130a in order to obtain a share key 150a can depend at least partially on the assigned factor. For example, one or more successful transactions with a particular personal data client 130a can lead to assigning a factor with a higher value, in turn reducing the amount of justification required for future transactions between the owner or the host and that same client 130a.

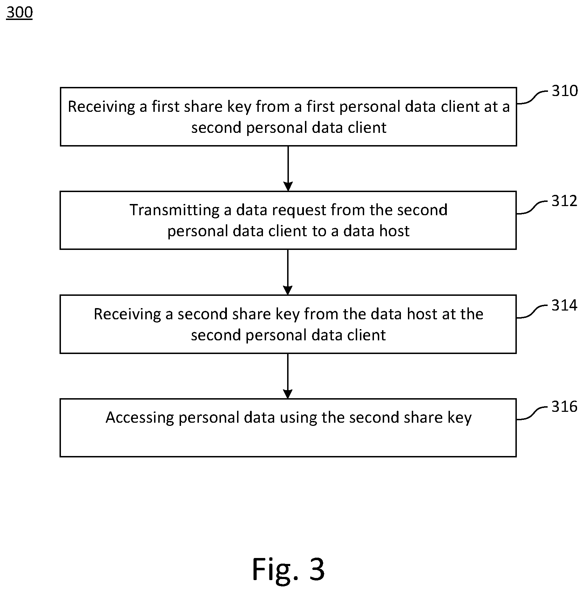

Referring to Figure 3, a data processing method 300 for processing personal data in a data processing system will now be described. While the method 300 is described with reference to the system 100, it is to be understood that any system suitable for performing the method 300 may be used.

The method 300 begins with receiving 310 a first share key 150a from a first personal data client 130a at a second personal data client 130b. The first share key 150a may have been obtained by the first personal data client 130a using the steps of method 200. The first share key 150a may be configured to grant access to a first portion of personal data 20a, 20b to the first personal data client 130a, and/or may be configured to provide a reference to a profile of the owner 10 to the first personal data client 130a. The first share key may be requested from the first data client by a second data client or the first share key may be transmitted proactively from the first data client to the second data client. The second of these situations is described in more detail below.

For example, the first personal data client 130a (such as a travel agent or an e-shop) may require a second personal data client 130b (such as an airline or a payment service provider) to access personal data of an owner 10 in order to complete a task or transaction (such as booking a flight or completing a purchase). In a first part of a transaction, the first personal data client 130a may be able to use the first share key 150a to access a requested portion of the personal data 20a, 20b of the owner 10 (such as their name and/or age) or may simply be able to use the first share key 150a to obtain a reference to a profile of the owner 10. The first personal data client 130a may then require a portion of the personal data 20a, 20b (such as passport details, payment details and/or a billing address) to be accessed by the second personal data client 130b in order to complete the task or transaction.

Next, a personal data request, or data access request, is transmitted 312 from the second personal data client 130b to a personal data host 110a, 110b. The personal data request is at least partially based on the first share key 150a and may be generated at the second personal data client 130b in response to receiving the first share key 150a from the first personal data client 130a. The second personal data client 130b may transmit 312 the generated personal data request to the personal data host 110a, 110b in order to access at least a portion of stored personal data 20a, 20b.

The personal data request can be a request for a second share key 150b. In some examples, the personal data request includes information relating to: the first share key 150a; an identity of the second personal data client 130b; a scope of personal data being requested; a justification for the data request; a length of time or duration for which the second personal data client 130b requires access to the personal data; and may optionally further comprise a certification of the second personal data client 130b. In particular, the personal data request includes at least a portion of the first share key 150a. Information relating to an identity, a scope, a justification, a length of time and/or certification may take the form of any such information described above for the previous method 200.

After transmitting 312 the personal data request, a second share key 150b is received 314 at the second personal data client 130b. Optionally, before receiving 312 the second share key 150b, the personal data host 110a, 110b, upon receipt of the personal data request, may notify the owner 10 of the personal data request. The personal data host 110a, 110b may then transmit the second share key 150b to the second personal data client 130b once an authorisation of the personal data request has been received from the owner 10 at the personal data host 110a, 110b. Alternatively, the personal data host 110a, 110b may receive an indication from the owner 10 that the personal data request is to be rejected, and, in turn, will not transmit a second share key 150b corresponding to that personal data request to the second personal data client 130b.

The second share key 150b is generated at least partially based on the personal data request, optionally at least partially based on the first share key 150a. The second share key 150b includes a pointer to the portion of the personal data 20a, 20b requested in the second personal data request. The pointer may be a link, such as a URL. The second share key 150b is preferably unique for the second personal data request. The second share key 150b is preferably usable only by the second personal data client 130b that generated the personal data request and not by the first data client or any other data client. For example, only the second personal data client 130b may access a URL included in the second share key 150b in order to access a requested portion of the personal data 20a, 20b. The second share key 150b may be time limited (for example, in accordance with information relating to a length of time included in the personal data request), such that a requested portion of the personal data 20a, 20b is accessible using the second share key 150b only for a predetermined length of time or until a predetermined date and/or time.

The second share key 150b may additionally or alternatively include a certification level of the requested personal data.

In some examples, the second share key 150b can include a contract signed digitally by both the one or more personal data hosts 110a, 110b and the second personal data client 130b. In this case, the second share key 150b can act as a record of personal data that has been shared to the second personal data client 130b, or as an indication of permission to share the data for the requested duration.

Each personal data request and direct access to personal data 20a, 20b can be recorded in a memory of the one or more personal data hosts 110a, 110b as a log of personal data history against the profile of the data owner. The owner 10 can access the log of personal data history stored at the one or more personal data hosts 110a, 110b. The log can thus record instances of sharing personal data 20a, 20b of the owner 10.

Personal data is then accessed 316 at the second personal data client 130b using the second share key 150b.

The method 300 can thus allow a second personal data client 130b to request and gain access to a portion of personal data 20a, 20b of an owner 10 without transmitting personal data directly between personal data clients 130a, 130b and without requiring the owner 10 to provide a new reference identifier to the second personal data client 130b.

The method 300 may be used to allow a first personal data client 130a to collaborate with one or more other personal data clients, such as a second personal data client 130b. In some examples, two or more personal data clients 130a, 130b such as an airline, an airport, a shop and/or a government authority can collaborate by sending share keys 150a, 150b to one another such that each personal data client 130a, 130b can request access to at least a portion of the personal data 20a, 20b of the owner. For example, an owner 10 may provide a reference identifier 120 to an airport 130a, such as by scanning a barcode, upon arrival at the airport. The airport 130a can request and receive a share key 150a according to the method 200, and then transmit the share key 150a to an airline and/or a shop within the airport. The airline or shop 130b may request their own respective share keys 150b on the basis of the first share key in order to obtain personal data of the owner 10, such as their scheduled flight departure time and/or official identification information such as passport information. This can allow the owner 10 to check in at the airport and have their relevant personal data provided to the relevant organisations by providing a single reference identifier and then by authorising access to that data by other specific data clients. This can both increase the security of sharing personal data and improve the ease with which an owner 10 can share their personal data.

Similarly, the method 300 can allow an airline or other travel company to collaborate with other actors of a journey of an owner 10. such as a hotel, a car hire company or public transport services. If an owner 10 agrees to allow an airline or travel company to synchronise with one or more other actors, the airline or travel company may transmit a share key 150a to one or more of the other actors 130b, allowing other actors 130b to piggyback off the original share key by requesting their own share keys to obtain access to personal data of the owner 10. For example, an airline 130a may transmit a share key 150a that it had requested and received for accessing personal data of the owner 10, e.g. a name and passport number, to a hotel and/or hire car company 130b at a destination location. The hotel and/or hire car company can then use the share key 150a to request and obtain a new share key 150b for access to the same or different personal data of the owner 10, such as an estimated arrival time, a name, an address, driving licence information and/or payment information. Thus, the owner 10 can permit access to their personal data for a plurality of personal data clients 130a, 130b based on providing a single reference identifier 120.

In the system 100, for example when performing methods 200, 300, the personal data hosts 110a, 110b and the personal data clients 130a, 130b may form a ring of compliance 170. A set of rules may be associated with the ring of compliance 170 which the personal data hosts and personal data clients within the ring of compliance 170 must obey. The rules can include personal data hosts 110a, 110b and/or personal data clients 130a, 130b only being permitted to transmit personal data requests and/or transmit share keys to other personal data hosts or clients also within the ring of compliance 170. The rules can include: personal data clients 130a, 130b never storing personal data; personal data clients 130a, 130b never transmitting personal data; and/or personal data clients 130a, 130b accessing personal data only for a purpose corresponding to justification information included in a personal data request.

Personal data hosts 110a, 110b and personal data clients 130a, 130b within the ring of compliance 170 can be periodically audited to ensure they are compliant with the associated set of rules, for example by checking one or more logs for instances of shared personal data and that such instances comply with the rules.

In some examples, a share key 150a, 150b that has been transmitted to a personal data client 130a, 130b can be revoked, such that the share key 150a, 150b is no longer operable to provide the personal data client 130a, 130b with access to personal data. For example, a share key 150a, 150b may be revoked upon determining that the personal data client 130a, 130b to whom the share key 150a, 150b had been transmitted no longer complies with a set of rules associated with a ring of compliance 170.

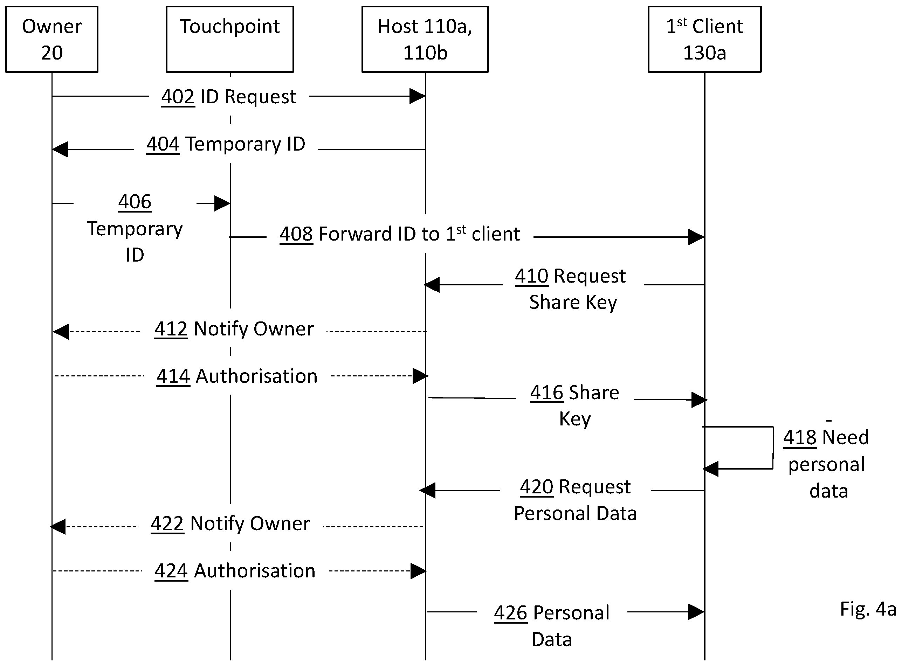

Referring to Figures 4a-c, exemplary data flows for completing personal data transactions will now be described.

Figure 4a shows an exemplary data flow for completing a data transaction for which a personal data client is required to access personal data of a personal data owner. The personal data owner and the personal data client may be the personal data owner 10 and a personal data client 130a of the system 100. Initially, the personal data owner 10 sends a request 402 to a personal data host for a reference identifier or temporary identifier, the terms being used synonymously herein. The personal data host may be a personal data host 110a, 110b of the system 100 on which personal data 20a, 20b of the personal data owner 10 are stored.

In response to the reference ID request 402, the personal data host 110a, 110b transmits a temporary identifier 404 to the owner 10. The temporary ID may be a temporary identifier 120 as described herein. The personal data owner 10 then provides the temporary identifier to a touchpoint 406. The touchpoint may include a scanner configured to scan the temporary ID in the format of a QR code or other visually encoded format. In one embodiment, the touchpoint is a webpage and the owner may enter information (such as an alphanumeric identifier) onto the webpage in order to provide the temporary ID 406. The touchpoint may be associated with an organisation such as a travel agency, shop or e-shop. The touchpoint may be operated by an agent (such as a booking agent, telesales agent or a representative of a company) on behalf of a data owner.

The touchpoint then forwards 408 the reference identifier to a first personal data client 130a to enable the client to process a future transaction such as making a reservation or booking shipment. The first personal data client 130a may be an airline, a hotel, a car hire company or a delivery company.

The first personal data client 130a then transmits a request 410 for a share key to the personal data host 110a, 110b. Optionally, in response to receiving the request 410, the personal data host 110a, 110b may send a notification 412 to the owner 10 to notify the owner 10 of the request 410. In response to receiving the notification 412, the personal data owner 10 can verify that it is still content to allow the first personal data client to access the data and send an authorisation message 414 to the personal data host 110a, 110b, indicating that the owner 10 authorises the first personal data client 130a to access a portion of their personal data 20a, 20b.

The personal data host 110a, 110b then transmits a share key 416 to the first personal data client 130a. The share key may be a share key 150a, 150b as described herein. The share key is operable to allow the first personal data client 130a to access a portion of the personal data 20a, 20b of the owner 10 in order to complete the first portion of the personal data transaction as described in more detail below. For example, the share key may provide the first personal data client 130a with the option to access a name, a title, an address and/or official identification information in order to complete a flight reservation, a hotel reservation, a car hire reservation, and/or booking of a delivery.

At some time after receipt of the reference identifier, the first personal data client 130a may determine 418 that personal data is required in order to complete a personal data transaction.

The first personal data client transmits a request 420 for personal data to the personal data host 110a, 110b. The request may be any personal data request as described herein, for example a request for access to payment details of the personal data owner 10. The request 420 includes the share key previously received 416 from the host.

Optionally, in response to receiving the request 420, the personal data host 110a, 110b may send a notification 422 to the owner 10 to notify the owner 10 of the request 420. In response to receiving the notification 422, the personal data owner 10 can send an authorisation message 424 to the personal data host 110a, 110b, indicating that the owner 10 authorises the first personal data client 130a to access a portion of their personal data 20a, 20b specified in the request 420.

The personal data host 110a, 110b then transmits 426 the requested data to the first personal data client 130a. In this way, the share key is operable to allow the first personal data client to access a portion of the personal data 20a, 20b of the owner 10 in order to complete the personal data transaction. For example, the share key may provide the touchpoint with access to a name, a billing address, bank details and/or other payment information in order to complete payment.

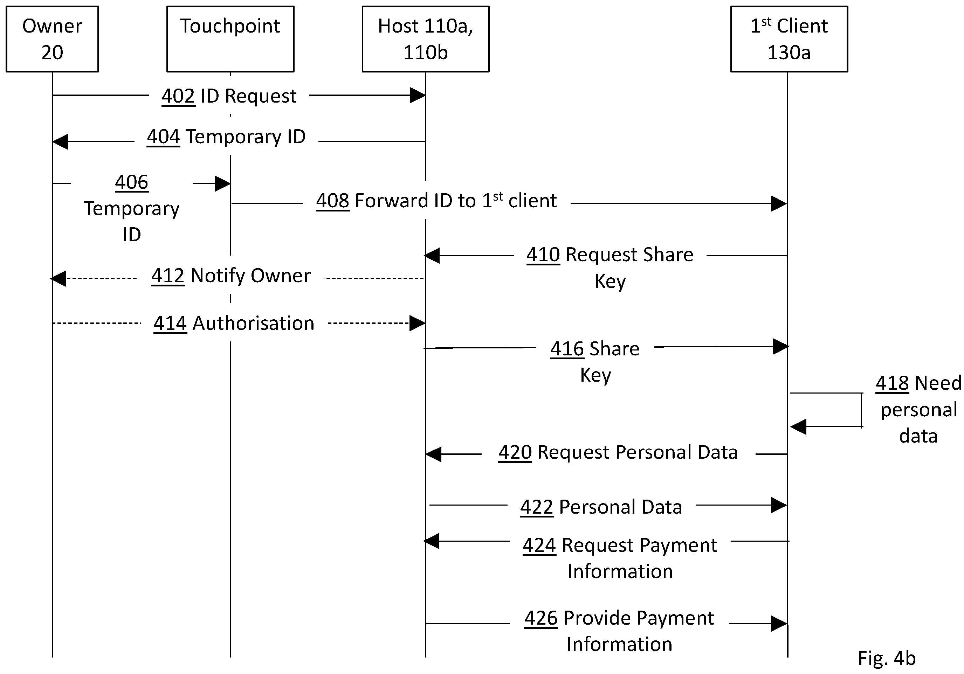

Figure 4b shows an exemplary data flow for completing a data transaction for which a personal data client is required to access personal data of a personal data owner. The data flow 402-420 of Figure 4b is the same as that of Figure 4a. Personal data is then received in step 422. In the example of Figure 4b, the second portion of the personal data transaction relates to payment.

Following receipt of the personal data 422 at the first client, the client then determines that payment is required for the transaction. Using a request 424 that includes the received share key, the first client requests payment information 424 from the host. Payment information is then sent 426 from the host to the first client, if the scope of the data share authorised by the data owner includes payment information. The payment information provided by the host 426 may be used directly by the first client or may be used in order to obtain payment via a payment transaction provider such as a bank or web-based payment system.

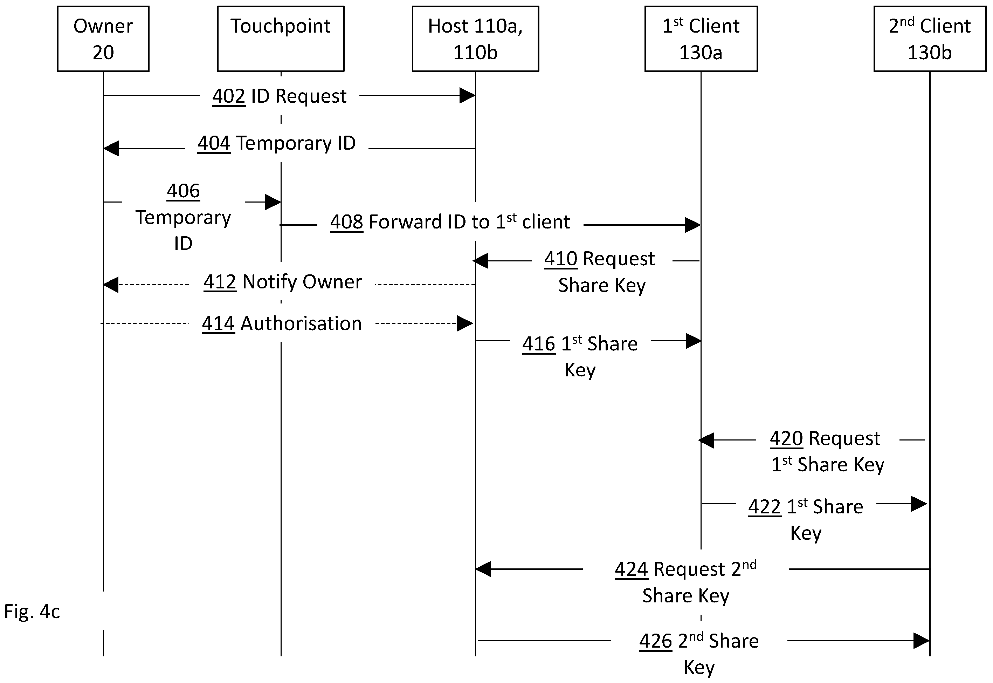

Figure 4c shows a second exemplary data flow for completing a data transaction for which two personal data clients required access to personal data of a personal data owner. Again, the data flow 402-416 is the same as in the examples of Figures 4a and 4b, except that in this example, it is a second data client 130b, which may be linked to the first data client, that requires personal data from the data owner 20. This may occur during or after completion of a transaction at the first data client 130a. For example, the first data client may enable the data owner to book a flight through a website. The second data client may be accessed via the website of the first data client and may enable the same data owner to book a hotel at the flight destination. However, in the present system, the first data client is not permitted to pass data owner information directly to the second data client.

The second personal data client 130b requests the first share key 420 from the first data client that the first data client previously received from the data host. In some embodiments, the first data client may automatically provide the first share key to the second data client without a specific request, for example if the second data client is processing part of a transaction that is being handled by the first data client.

Alternatively, the second data client may determine that it requires data relating to the owner via a direct interaction with the owner. However, rather than receiving a new temporary ID from the owner, the second data client requests the first share key from the first data client and uses the first share key in place of a temporary identifier as described below.

The second data client 130b cannot use the first share key to obtain information from the data host however, as the first share key is only usable by the first data client to which the first share key was provided. Rather than using it directly, the second data client sends a request 424 for a second share key of its own to the data host 110a, 110b. The request 424 for the second share key includes at least a portion of the first share key received from the first data client 130a. This enables the second data client to request a share key of its own from the data host without having to first obtain a temporary identifier from the data owner. That is, the grant of the second share key to the second data client piggybacks on the grant of the first share key to the first data client, with the first share key being used by the second data client in a similar way to the way in which the first data client uses the temporary ID.

The second share key, which is specific to the second data client 130b, is then provided 426 by the host to the second data client 130b. The host may note and store an indication that the second share key is linked to the first share key and therefore if the first share key is rescinded or expires, the second share key may also be rescinded or may expire.

It is further noted that, if the second data owner needs to interact itself with the data owner, (directly or via a touchpoint), then a new temporary ID may be requested and used by the second data owner. This may occur, for example, if the second data client requires data with a broader or a different scope than that to which the first data client has access.

In the example of Figure 4c, the first and second personal data clients only access portions of the personal data that they require for completing a respective portion of the personal data transaction. In particular, the first share key may provide the first data client with access to different information to that which the second share key provide to the second data client. For example, the second data client can complete the personal data transaction without requiring access to all of the personal data to which the first data client has access. This can improve the security of sharing personal data for completing personal data transactions.

## Claims

1. A method of enabling data access for a transaction between a data client (130a, 130b) and a data owner (10), wherein the data is stored at a data host (110a, 110b), the method implemented at the data host (110a, 110b) and comprising:
storing data (20a, 20b) associated with the data owner (10) in a data owner profile, the profile including a static identifier associated with the data owner;
receiving from the data owner (10) a request for a temporary identifier (120) to enable access to the data by a data client (130a, 130b);
generating and transmitting the temporary identifier (120) to the data owner (10);
storing the temporary identifier in the data owner profile;
receiving from the data client (130a, 130b) an access request for at least a portion of the stored data (20a, 20b), the access request comprising the temporary identifier (120), an identifier of the data client, an indication of the scope of the request, and a duration associated with the request;
verifying that access to the data (20a, 20b) can be enabled for the data client (130a, 130b) based on the information in the access request;
transmitting to the data client (130a, 130b) a share key (150a, 150b) for the requested data, wherein the share key comprises an identifier of the portion of the stored data or a pointer to the location of the portion of the stored data.

2. The method according to claim 1 further comprising receiving the share key (150a, 150b) from the data client (130a, 130b), validating the share key and transmitting the at least a portion of the stored data (20a, 20b) to the data client.

3. The method according to claim 1 or 2 wherein verifying that access to the data (20a, 20b) can be enabled for the data client (130a, 130b) based on the information in the access request comprises comparing an identifier of the data client received from the data owner (10) with the identifier of the data client received in the access request.

4. The method according to any of claims 1 to 3 wherein the request for the temporary identifier (120) includes an identifier of the data client (130a, 130b) and wherein the temporary identifier is stored by the data host (110a, 110b) in the data owner profile together with the identifier of the data client, optionally wherein verifying that access to the data (20a, 20b) can be enabled for the data client based on the information in the access request comprises comparing the temporary identifier stored in the data owner profile with the temporary identifier received in the access request.

5. The method according any preceding claim wherein verifying that access to the data (20a, 20b) can be enabled for the data client (130a, 130b) further comprises notifying the data owner (10) of the access request and transmitting the share key (150a, 150b) to the data client only in response to an authorisation message from the data owner.

6. The method according to any preceding claim wherein the method further comprises storing the share key (150a, 150b) and the information included in the access request in the data owner profile.

7. A method of enabling data access for a transaction between a data client (130a, 130b) and a data owner (10), wherein the data (20a, 20b) is stored at a data host (110a, 110b), the method implemented at the data client (130a, 130b) and comprising:
receiving from the data owner (10) a temporary identifier (120) associated with the data owner;
sending to the data host (110a, 110b) an access request for data (20a, 20b) associated with the data owner and stored at the data host, the access request comprising the temporary identifier (120), an identifier of the data client, an indication of the scope of the request, and a duration associated with the access request;
receiving from the data host (110a, 110b) a share key (150a, 150b) enabling access to the data (20a, 20b), wherein the share key comprises an identifier of at least a portion of the stored data or a pointer to the location of the portion of the stored data; and
storing the share key (150a, 150b) at the data client (130a, 130b).

8. The method of claim 7 further comprising forwarding the share key (150a, 150b) to the data host (110a, 110b) to request the data (20a, 20b) and receiving the data from the data host.

9. A method of enabling data access for a transaction between a data owner (10) and a data client (130a, 130b), wherein the data (20a, 20b) is stored at a data host (110a, 110b), the method implemented at the data owner (10) and comprising:
establishing a profile with a data host (110a, 110b) and sending data (20a, 20b) to the data host for storage in the profile;
commencing a transaction with a data client (130a, 130b) and determining that the data client requires access to data (20a, 20b) stored in the profile;
sending a request for a temporary identifier (120) from the data owner (10) to the data host (110a, 110b), the request including an identifier of the data client (130a, 130b);
receiving at the data owner from the data host the temporary identifier (120);
transmitting the temporary identifier (120) from the data owner to the data client;
receiving at the data owner from the data host an access notification comprising an identifier of the data client (130a, 130b) or the temporary identifier (120);
determining whether the identifier of the data client or the transaction identifier in the access notification matches the data client to whom the temporary identifier was transmitted;
sending to the data host (110a, 110b) an instruction to share the data with the data client, wherein in response to the instruction, the data host (110a, 110b) is configured to transmit to the data client a share key (150a, 150b) for the requested data, the share key comprising an identifier of at least a portion of the stored data or a pointer to the location of the portion of the stored data.

10. The method of claim 9 further comprising storing at the data owner (10) the temporary identifier (120) and the identifier of the data client (130a, 130b).

11. The method of any preceding claim wherein the access request further comprises a justification for requesting the data (20a, 20b).

12. The method of any preceding claim wherein the temporary identifier (120) is associated with the data owner (10) for a transaction with the data client (130a, 130b).

13. The method of any preceding claim wherein the temporary identifier (120) comprises an identifier specific to the request.

14. The method of any preceding claim wherein the temporary identifier (120) comprises an alphanumeric identifier associated with the data owner (10) or a URL or a QR code associated with the data owner.

15. The method of any preceding claim wherein the data (20a, 20b) comprises identity information, contact information or payment information for the data owner (10).

16. The method of any preceding claim wherein the data owner (10) comprises a data owner device, optionally a handheld mobile device, a computer, or a computer terminal.

17. The method of any preceding claim wherein the data client (130a, 130b) comprises a merchant system, a booking system, a service provider or a travel provider.

18. The method of any preceding claim wherein the data host (110a, 110b) comprises a plurality of networked servers or a cloud based storage system.

19. The method of any preceding claim wherein the duration comprises a period of time during which the data client (130a, 130b) is permitted to access the data (20a, 20b).

20. The method of any preceding claim wherein the indication of the scope of the request comprises an indication of the data requested.

21. The method of any preceding claim wherein the share key (150a, 150b) comprises a unique link to enable access to the data (20a, 20b) for the data client (130a, 130b).

22. Apparatus comprising means for implementing the methods according to any one of claims 1 to 21.

23. A computer program, computer program product or computer readable medium comprising instructions which, when executed by a computer, cause the computer to carry out the steps of the method of any of claims 1 to 21.

## Patentansprüche

1. Verfahren zum Ermöglichen des Datenzugriffs für eine Transaktion zwischen einem Daten-Client (130a, 130b) und einem Datenbesitzer (10), wobei die Daten auf einem Datenhost (110a, 110b) gespeichert sind, wobei das Verfahren auf dem Datenhost (110a, 110b) implementiert wird und Folgendes umfasst:
Speichern von mit dem Datenbesitzer (10) assoziierten Daten (20a, 20b) in einem Datenbesitzerprofil, wobei das Profil eine mit dem Datenbesitzer assoziierte statische Kennung enthält;
Empfangen einer Anforderung für eine temporäre Kennung (120) vom Datenbesitzer (10), um den Zugriff auf die Daten durch einen Daten-Client (130a, 130b) zu ermöglichen;
Erzeugen und Übertragen der temporären Kennung (120) zum Datenbesitzer (10);
Speichern der temporären Kennung im Datenbesitzerprofil;
Empfangen einer Zugriffsanforderung für mindestens einen Teil der gespeicherten Daten (20a, 20b) vom Daten-Client (130a, 130b), wobei die Zugriffsanforderung die temporäre Kennung (120), eine Kennung des Daten-Client, eine Angabe des Umfangs der Anforderung und eine mit der Anforderung assoziierte Dauer umfasst;
Überprüfen, ob der Zugriff auf die Daten (20a, 20b) für den Daten-Client (130a, 130b) ermöglicht werden kann, auf der Basis der Informationen in der Zugriffsanforderung;
Übertragen eines Share-Key (150a, 150b) für die angeforderten Daten zum Daten-Client (130a, 130b), wobei der Share-Key eine Kennung des Teils der gespeicherten Daten oder einen Zeiger auf den Ort des Teils der gespeicherten Daten umfasst.

2. Verfahren nach Anspruch 1, das ferner das Empfangen des Share-Key (150a, 150b) vom Daten-Client (130a, 130b), das Validieren des Share-Key und das Übertragen des mindestens einen Teils der gespeicherten Daten (20a, 20b) zum Daten-Client umfasst.

3. Verfahren nach Anspruch 1 oder 2, wobei das Überprüfen, ob der Zugriff auf die Daten (20a, 20b) für den Daten-Client (130a, 130b) ermöglicht werden kann, auf der Basis der Informationen in der Zugriffsanforderung, das Vergleichen einer vom Datenbesitzer (10) empfangenen Kennung des Daten-Client mit der in der Zugriffsanforderung empfangenen Kennung des Daten-Client umfasst.

4. Verfahren nach einem der Ansprüche 1 bis 3, wobei die Anforderung für die temporäre Kennung (120) eine Kennung des Daten-Client (130a, 130b) umfasst, und wobei die temporäre Kennung vom Datenhost (110a, 110b) im Datenbesitzerprofil zusammen mit der Kennung des Daten-Client gespeichert wird, wobei optional die Überprüfung, ob der Zugriff auf die Daten (20a, 20b) für den Daten-Client ermöglicht werden kann, auf der Basis der Informationen in der Zugriffsanforderung das Vergleichen der im Datenbesitzerprofil gespeicherten temporären Kennung mit der in der Zugriffsanforderung empfangenen temporären Kennung umfasst.

5. Verfahren nach einem vorherigen Anspruch, wobei das Überprüfen, ob der Zugriff auf die Daten (20a, 20b) für den Daten-Client (130a, 130b) ermöglicht werden kann, ferner das Benachrichtigen des Datenbesitzers (10) über die Zugriffsanforderung und das Übertragen des Share-Key (150a, 150b) zu dem Daten-Client nur als Reaktion auf eine Autorisierungsnachricht vom Datenbesitzer umfasst.

6. Verfahren nach einem vorherigen Anspruch, wobei das Verfahren ferner das Speichern des Share-Key (150a, 150b) und der in der Zugriffsanforderung enthaltenen Informationen im Datenbesitzerprofil umfasst.

7. Verfahren zum Ermöglichen des Datenzugriffs für eine Transaktion zwischen einem Daten-Client (130a, 130b) und einem Datenbesitzer (10), wobei die Daten (20a, 20b) auf einem Datenhost (110a, 110b) gespeichert sind, wobei das Verfahren auf dem Daten-Client (130a, 130b) implementiert wird und Folgendes umfasst:
Empfangen einer mit dem Datenbesitzer assoziierten temporären Kennung (120) vom Datenbesitzer (10);
Senden einer Zugriffsanforderung für mit dem Datenbesitzer assoziierten und auf dem Datenhost gespeicherten Daten (20a, 20b) zum Datenhost (110a, 110b), wobei die Zugriffsanforderung die temporäre Kennung (120), eine Kennung des Daten-Client, eine Angabe des Umfangs der Anforderung und eine mit der Zugriffsanforderung assoziierte Dauer umfasst;
Empfangen eines Share-Key (150a, 150b) vom Datenhost (110a, 110b), der den Zugriff auf die Daten (20a, 20b) ermöglicht, wobei der Share-Key eine Kennung mindestens eines Teils der gespeicherten Daten oder einen Zeiger auf den Ort des Teils der gespeicherten Daten umfasst; und
Speichern des Share-Key (150a, 150b) auf dem Daten-Client (130a, 130b).

8. Verfahren nach Anspruch 7, das ferner das Weiterleiten des Share-Key (150a, 150b) an den Datenhost (110a, 110b) zum Anfordern der Daten (20a, 20b) und das Empfangen der Daten vom Datenhost umfasst.

9. Verfahren zum Ermöglichen des Datenzugriffs für eine Transaktion zwischen einem Datenbesitzer (10) und einem Daten-Client (130a, 130b), wobei die Daten (20a, 20b) bei einem Datenhost (110a, 110b) gespeichert sind, wobei das Verfahren beim Datenbesitzer (10) implementiert wird und Folgendes umfasst:
Erstellen eines Profils bei einem Datenhost (110a, 110b) und Senden von Daten (20a, 20b) zum Datenhost zur Speicherung in dem Profil;
Beginnen einer Transaktion mit einem Daten-Client (130a, 130b) und Feststellen, dass der Daten-Client Zugang zu den im Profil gespeicherten Daten (20a, 20b) benötigt;
Senden einer Anforderung für eine temporäre Kennung (120) vom Datenbesitzer (10) zum Datenhost (110a, 110b), wobei die Anforderung eine Kennung des Daten-Client (130a, 130b) enthält;
Empfangen der temporären Kennung (120) vom Datenhost beim Datenbesitzer;
Übertragen der temporären Kennung (120) vom Datenbesitzer zum Daten-Client;
Empfangen einer Zugriffsbenachrichtigung, die eine Kennung des Daten-Client (130a, 130b) oder die temporäre Kennung (120) umfasst, vom Datenhost beim Datenbesitzer;
Feststellen, ob die Kennung des Daten-Client oder die Transaktionskennung in der Zugriffsbenachrichtigung mit dem Daten-Client übereinstimmt, zu dem die temporäre Kennung übertragen wurde;
Senden eines Befehls zum Teilen der Daten mit dem Daten-Client zum Datenhost (110a, 110b), wobei als Reaktion auf den Befehl der Datenhost (110a, 110b) zum Übermitteln eines Share-Key (150a, 150b) für die angeforderten Daten zum Daten-Client konfiguriert ist, wobei der Share-Key eine Kennung mindestens eines Teils der gespeicherten Daten oder einen Zeiger auf den Ort des Teils der gespeicherten Daten umfasst.

10. Verfahren nach Anspruch 9, das ferner das Speichern der temporären Kennung (120) und der Kennung des Daten-Client (130a, 130b) beim Datenbesitzer (10) umfasst.

11. Verfahren nach einem vorherigen Anspruch, wobei die Zugriffsanforderung ferner eine Begründung für die Anforderung der Daten (20a, 20b) umfasst.

12. Verfahren nach einem vorherigen Anspruch, wobei die temporäre Kennung (120) mit dem Datenbesitzer (10) für eine Transaktion mit dem Daten-Client (130a, 130b) assoziiert ist.

13. Verfahren nach einem vorherigen Anspruch, wobei die temporäre Kennung (120) eine für die Anforderung spezifische Kennung umfasst.

14. Verfahren nach einem vorherigen Anspruch, wobei die temporäre Kennung (120) eine mit dem Datenbesitzer (10) assoziierte alphanumerische Kennung oder eine(n) mit dem Datenbesitzer assoziierte(n) URL oder QR-Code umfasst.

15. Verfahren nach einem vorherigen Anspruch, wobei die Daten (20a, 20b) Identitätsinformationen, Kontaktinformationen oder Zahlungsinformationen für den Datenbesitzer (10) umfassen.

16. Verfahren nach einem vorherigen Anspruch, wobei der Datenbesitzer (10) ein Datenbesitzergerät, optional ein mobiles Handgerät, einen Computer oder einen Computerterminal umfasst.

17. Verfahren nach einem vorherigen Anspruch, wobei der Daten-Client (130a, 130b) ein Händlersystem, ein Buchungssystem, einen Dienstleister oder einen Reiseanbieter umfasst.

18. Verfahren nach einem vorherigen Anspruch, wobei der Datenhost (110a, 110b) mehrere vernetzte Server oder ein cloudbasiertes Speichersystem umfasst.

19. Verfahren nach einem vorherigen Anspruch, wobei die Dauer einen Zeitraum umfasst, während dessen der Daten-Client (130a, 130b) auf die Daten (20a, 20b) zugreifen darf.

20. Verfahren nach einem vorherigen Anspruch, wobei die Angabe des Umfangs der Anforderung eine Angabe der angeforderten Daten umfasst.

21. Verfahren nach einem vorherigen Anspruch, wobei der Share-Key (150a, 150b) einen eindeutigen Link umfasst, um dem Daten-Client (130a, 130b) den Zugriff auf die Daten (20a, 20b) zu ermöglichen.

22. Vorrichtung mit Mitteln zum Implementieren des Verfahrens nach einem der Ansprüche 1 bis 21.

23. Computerprogramm, Computerprogrammprodukt oder computerlesbares Medium mit Befehlen, die bei Ausführung durch einen Computer den Computer zum Ausführen der Schritte des Verfahrens nach einem der Ansprüche 1 bis 21 veranlassen.

## Revendications

1. Procédé d'autorisation de l'accès à des données pour une transaction entre un client de données (130a, 130b) et un propriétaire de données (10), dans lequel les données sont stockées au niveau d'un hôte de données (110a, 110b), le procédé étant implémenté au niveau de l'hôte de données (110a, 110b) et comprenant :
le stockage de données (20a, 20b) associées au propriétaire de données (10) dans un profil de propriétaire de données, le profil comportant un identifiant statique associé au propriétaire de données ;
la réception à partir du propriétaire de données (10) d'une demande d'identifiant temporaire (120) pour autoriser l'accès aux données par un client de données (130a, 130b) ;
la génération et la transmission de l'identifiant temporaire (120) au propriétaire de données (10) ;
le stockage de l'identifiant temporaire dans le profil de propriétaire de données ;
la réception à partir du client de données (130a, 130b) d'une demande d'accès pour au moins une partie des données stockées (20a, 20b), la demande d'accès comprenant l'identifiant temporaire (120), un identifiant du client de données, une indication de l'étendue de la demande, et une durée associée à la demande ;
la vérification que l'accès aux données (20a, 20b) peut être autorisé pour le client de données (130a, 130b) sur la base des informations contenues dans la demande d'accès ;
la transmission au client de données (130a, 130b) d'une clé de partage (150a, 150b) pour les données demandées, dans lequel la clé de partage comprend un identifiant de la partie des données stockées ou un pointeur vers l'emplacement de la partie des données stockées.

2. Procédé selon la revendication 1, comprenant en outre la réception de la clé de partage (150a, 150b) à partir du client de données (130a, 130b), la validation de la clé de partage et la transmission de l'au moins une partie des données stockées (20a, 20b) au client de données.

3. Procédé selon la revendication 1 ou 2, dans lequel la vérification que l'accès aux données (20a, 20b) peut être autorisé pour le client de données (130a, 130b) sur la base des informations contenues dans la demande d'accès comprend la comparaison d'un identifiant du client de données reçu à partir du propriétaire de données (10) à l'identifiant du client de données reçu dans la demande d'accès.

4. Procédé selon l'une quelconque des revendications 1 à 3, dans lequel la demande d'identifiant temporaire (120) comporte un identifiant du client de données (130a, 130b) et dans lequel l'identifiant temporaire est stocké par l'hôte de données (110a, 110b) dans le profil de propriétaire de données avec l'identifiant du client de données, éventuellement dans lequel la vérification que l'accès aux données (20a, 20b) peut être autorisé pour le client de données sur la base des informations contenues dans la demande d'accès comprend la comparaison de l'identifiant temporaire stocké dans le profil de propriétaire de données à l'identifiant temporaire reçu dans la demande d'accès.

5. Procédé selon l'une quelconque des revendications précédentes, dans lequel la vérification que l'accès aux données (20a, 20b) peut être autorisé pour le client de données (130a, 130b) comprend en outre la notification au propriétaire de données (10) de la demande d'accès et la transmission de la clé de partage (150a, 150b) au client de données uniquement en réponse à un message d'autorisation par le propriétaire de données.

6. Procédé selon l'une quelconque des revendications précédentes, le procédé comprenant en outre le stockage de la clé de partage (150a, 150b) et des informations incluses dans la demande d'accès dans le profil de propriétaire de données.

7. Procédé d'autorisation d'un accès à des données pour une transaction entre un client de données (130a, 130b) et un propriétaire de données (10), dans lequel les données (20a, 20b) sont stockées au niveau d'un hôte de données (110a, 110b), le procédé étant implémenté au niveau du client de données (130a, 130b) et comprenant :
la réception à partir du propriétaire de données (10) d'un identifiant temporaire (120) associé au propriétaire de données ;
l'envoi à l'hôte de données (110a, 110b) d'une demande d'accès à des données (20a, 20b) associées au propriétaire de données et stockées au niveau de l'hôte de données, la demande comprenant l'identifiant temporaire (120), un identifiant du client de données, une indication de l'étendue de la demande, et une durée associée à la demande ;
la réception à partir de l'hôte de données (110a, 110b) d'une clé de partage (150a, 150b) permettant l'accès aux données (20a, 20b), dans lequel la clé de partage comprend un identifiant d'au moins une partie des données stockées ou un pointeur vers l'emplacement de la partie des données stockées ; et
le stockage de la clé de partage (150a, 150b) au niveau du client de données (130a, 130b).

8. Procédé selon la revendication 7 comprenant en outre le transfert de la clé de partage (150a, 150b) à l'hôte de données (110a, 110b) pour demander les données (20a, 20b) et recevoir les données à partir de l'hôte de données.

9. Procédé d'autorisation d'un accès à des données pour une transaction entre un propriétaire de données (10) et un client de données (130a, 130b), dans lequel les données (20a, 20b) sont stockées au niveau d'un hôte de données (110a, 110b), le procédé étant implémenté au niveau du propriétaire de données (10) et comprenant :
l'établissement d'un profil avec un hôte de données (110a, 110b) et l'envoi de données (20a, 20b) à l'hôte de données en vue de leur stockage dans le profil ;
le commencement d'une transaction avec un client de données (130a, 130b) et la détermination que le client de données nécessite un accès aux données (20a, 20b) stockées dans le profil ;
l'envoi d'une demande d'identifiant temporaire (120) du propriétaire de données (10) à l'hôte de données (110a, 110b), la demande comportant un identifiant du client de données (130a, 130b) ;
la réception au niveau du propriétaire de données depuis l'hôte de données de l'identifiant temporaire (120) ;
la transmission de l'identifiant temporaire (120) par le propriétaire de données au client de données ;
la réception au niveau du propriétaire de données à partir de l'hôte de données d'une notification d'accès comprenant un identifiant du client de données (130a, 130b) ou l'identifiant temporaire (120) ;
la détermination que l'identifiant du client de données ou l'identifiant de transaction dans la notification d'accès correspond ou non au client de données auquel l'identifiant temporaire a été transmis ;
l'envoi à l'hôte de données (110a, 110b) d'une instruction de partager les données avec le client de données, dans lequel, en réponse à l'instruction, l'hôte de données (110a, 110b) est configuré pour transmettre au client de données une clé de partage (150a, 150b) pour les données demandées, la clé de partage comprenant un identifiant d'au moins une partie des données stockées ou un pointeur vers l'emplacement de la partie des données stockées.

10. Procédé selon la revendication 9 comprenant en outre le stockage au niveau du propriétaire de données (10) de l'identifiant temporaire (120) et de l'identifiant du client de données (130a, 130b).

11. Procédé selon l'une quelconque des revendications précédentes dans lequel la demande d'accès comprend en outre une justification de la demande des données (20a, 20b).

12. Procédé selon l'une quelconque des revendications précédentes dans lequel l'identifiant temporaire (120) est associé au propriétaire de données (10) pour une transaction avec le client de données (130a, 130b).

13. Procédé selon l'une quelconque des revendications précédentes dans lequel l'identifiant temporaire (120) comprend un identifiant spécifique à la demande.

14. Procédé selon l'une quelconque des revendications précédentes dans lequel l'identifiant temporaire (120) comprend un identifiant alphanumérique associé au propriétaire de données (10) ou une URL ou un code QR associé au propriétaire de données.

15. Procédé selon l'une quelconque des revendications précédentes dans lequel les données (20a, 20b) comprennent des informations d'identité, des informations de contact ou des informations de paiement du propriétaire de données (10).

16. Procédé selon l'une quelconque des revendications précédentes dans lequel le propriétaire de données (10) comprend un dispositif de propriétaire de données, éventuellement un appareil mobile portatif, un ordinateur ou un terminal informatique.

17. Procédé selon l'une quelconque des revendications précédentes dans lequel le client de données (130a, 130b) comprend un système de marchand, un système de réservation, un prestataire de services ou un prestataire de voyages.

18. Procédé selon l'une quelconque des revendications précédentes dans lequel l'hôte de données (110a, 110b) comprend une pluralité de serveurs en réseau ou un système de stockage basé sur le cloud.

19. Procédé selon l'une quelconque des revendications précédentes dans lequel la durée comprend une période durant laquelle le client de données (130a, 130b) est autorisé à accéder aux données (20a, 20b).

20. Procédé selon l'une quelconque des revendications précédentes dans lequel l'indication de l'étendue de la demande comprend une indication des données demandées.

21. Procédé selon l'une quelconque des revendications précédentes dans lequel la clé de partage (150a, 150b) comprend un lien unique autorisant l'accès aux données (20a, 20b) par le client de données (130a, 130b).

22. Appareil comprenant des moyens de mise en œuvre des procédés selon l'une quelconque des revendications 1 à 21.

23. Programme d'ordinateur, produit de programme d'ordinateur ou support lisible comprenant des instructions qui, une fois exécutées par un ordinateur, amènent l'ordinateur à exécuter les étapes du procédé selon l'une quelconque des revendications 1 à 21.
